# EUROPÄISCHE PATENTANMELDUNG

(11) **EP 0 743 152 A2**
(43) Veröffentlichungstag der Anmeldung: **20.11.1996**
(21) Anmeldenummer: 96104261.1
(22) Anmeldetag: 18.03.1996
(51) Int. Cl.: B29C 33/00, B29C 39/00

(54) **Gussrahmen, Verfahren zur Herstellung eines mikrostrukturierten Körpers, mikrostrukturierter Körper, Verfahren zur Herstellung eines integriert-optischen Bauteils und integriert-optisches Bauteil**

(30) Priorität: 15.05.1995 DE 19517087
(71) Anmelder: ROBERT BOSCH GMBH, 70442 Stuttgart (DE)
(72) Erfinder: Kragl, Hans, Dr. Dipl.-Ing., 31199 Diekholzen (DE)

(57) **Zusammenfassung**

Es wird ein Gußrahmen (20) vorgeschlagen, der wenigstens ein Rastelement (75) aufweist, das in ein Gegenrastelement auf einem Formstempel einrasten kann. Der Gußrahmen dient für ein Verfahren zur Herstellung eines mikrostrukturierten Körpers, indem der Innenraum des Gußrahmens im auf dem Formstempel aufgesetzten Zustand mit einer aushärtbaren Flüssigkeit gefüllt wird, die dann ausgehärtet wird und wobei dann der aus dem Gußrahmen und der ausgehärteten Flüssigkeit bestehende mikrostrukturierte Körper vom Formstempel wieder abgehoben wird. Erhebungen im Formstempel hinterlassen dabei Vertiefungen. Der mikrostrukturierte Körper wird mit Polymerklebstoff auf ein Bodenteil oder ein Substrat geklebt und dient als Deckelbauteil für ein integriert-optisches Bauteil, das wenigstens einen Wellenleiter aufweist.

## Beschreibung

### Stand der Technik

Die Erfindung geht aus von einem Gußrahmen nach dem Oberbegriff des Anspruches 1, einem Verfahren zur Herstellung eines mikrostrukturierten Körpers nach dem Oberbegriff des Anspruchs 6, einem mikrostrukturierten Körper nach dem Oberbegriff des Anspruchs 9, einem Verfahren zur Herstellung eines integriert-optischen Bauteils nach dem Oberbegriff des Anspruchs 11 oder 12 und einem integriert-optischen Bauteil nach dem Oberbegriff des Anspruchs 13 oder 14.

In der DE-OS 42 17 553 A1 ist ein Verfahren und eine Vorrichtung zum Ankoppeln von lichtleitenden Fasern für optische Signale der Nachrichtentechnik oder Sensorik an eine integriert-optische Komponente beschrieben. Dabei werden die Fasern in einem Vorjustageteil vorfixiert, das dann an ein integriert-optisches Bauelement angekoppelt wird, woraufhin die vorfixierten Fasern in Nuten des integriert-optischen Bauelements zu liegen kommen.

Aus der WO 94/08236 ist ein Verfahren zum Herstellen eines Deckels für eine integriert-optische Schaltung bekannt. Dabei wird ein optisches Bauelement in einen Formstempel eingelegt, welcher Justierelemente aufweist. Beim Einlegen wird das optische Bauelement mittels der Justierelemente auf dem Formstempel justiert. Durch Gießen einer aushärtbaren Flüssigkeit um das optische Bauelement herum wird ein Deckel, welcher das optische Bauelement enthält, hergestellt. Als Gießverfahren ist ein Spritzguß- oder Spritzprägeverfahren einsetzbar, bei dem die aushärtbare Flüssigkeit unter Druck- und/oder Temperatureinwirkung in eine gewünschte Form gebracht und dann ausgehärtet wird. Die aushärtbare Flüssigkeit weist allerdings bei diesem Verfahren meist eine hohe Viskosität auf, die zwar relativ exakte Außenabmessungen des entstehenden optischen Bauelements zuläßt, aber bezüglich der Abformbarkeit Grenzen setzt.

In der deutschen Patentanmeldung P 44 34 832.0 ist ein Verfahren zur Herstellung eines integriert-optischen Deckelbauteils beschrieben, bei dem ein vorgefertigter, trogförmiger Behälter auf einen Formstempel gesetzt wird und anschließend eine Reaktionsgußmasse in den Innenraum des trogförmigen Behälters eingegossen wird. Dabei dient der trogförmige Behälter als Außenumrandung für das entstehende Deckelbauteil. Das Aufsetzen des trogförmigen Behälters auf den Formstempel erfolgt dabei durch einen Mechanismus, bei dem eine Deckelplatte mit dem darin eingelegten trogförmigen Behälter entlang von Führungsstangen auf die Oberfläche des Formstempels abgesenkt wird.

### Vorteile der Erfindung

Der erfindungsgemäße Gußrahmen mit den kennzeichnenden Merkmalen des Anspruchs 1 hat demgegenüber den Vorteil, daß der Gußrahmen aufgrund des wenigstens einen daran angeordneten Rastelements, welches in ein korrespondierendes Gegenrastelement auf dem Formstempel einrastbar ist, bezüglich der Oberfläche des Formstempels präziser justierbar ist. Da der Gußrahmen bei der Herstellung eines mikrostrukturierten Körpers immer als Teil des entstehenden mikrostrukturierten Körpers dienen kann, dessen Außenmaße durch die Außenkontur des Gußrahmens bestimmt wird, ist es für die weitere Verwendung des mikrostrukturierten Körpers von Vorteil, wenn die Mikrostrukturierung des mikrostrukturierten Körpers bezüglich der Lage des Gußrahmens in einer stets gleichbleibenden Position angeordnet ist, wie es das Rastelement bewirkt.

Durch die in den abhängigen Ansprüchen 2 bis 4 aufgeführten Maßnahmen sind vorteilhafte Weiterbildungen und Verbesserungen des im Anspruchs 1 angegebenen Gußrahmens möglich.

Ein besonderer Vorteil entsteht dadurch, daß das Rastelement eine Lippe aufweist, die dichtend in das im Formstempel als Wanne ausgebildete Gegenrastelement eingreift, da dadurch die Verwendung von dünnflüssigeren Reaktionsgußmassen bei der Herstellung eines mikrostrukturierten Körpers unter Verwendung des Gußrahmens möglich ist. Die Lippe sorgt dabei dafür, daß keine oder nur wenig Flüssigkeit durch die Grenzlinie zwischen dem Gußrahmen und dem Formstempel hindurchtreten kann.

Wenn der Gußrahmen an seiner Oberseite wenigstens eine Einfüllöffnung für die aushärtbare Flüssigkeit aufweist, so entsteht dadurch der Vorteil, daß das Einfüllen der aushärtbaren Flüssigkeit erst nach dem Aufsetzen des Gußrahmens auf den Formstempel erfolgt, so daß sich dadurch der Verfahrensablauf vereinfacht.

Weist der Gußrahmen eine in der Lage zum Rastelement definierte Außenkontur auf, so läßt sich der entstehende mikrostrukturierte Körper mit weiteren, ebenso präzise Außenabmessungen aufweisenden Elementen verbinden, wobei für eine Ankopplung der Mikrostrukturen des mikrostrukturierten Körpers an solch ein weiteres Element die Justierung anhand der Außenkonturen verwendbar ist. Die Präzision der Mikrostrukturierung läßt sich daher dann auch auf Anordnungen, die den entstehenden mikrostrukturierten Körper verwenden, übertragen.

Die Ankoppelbarkeit eines Steckelements in dem wenigstens eine Lichtleitfaser gehaltert ist, eröffnet für den Gußrahmen die bevorzugte Verwendung bei der Herstellung eines mikrostrukturierten Körpers in Form eines integriert-optischen Deckelbauteils. Die in der Optik besonders wichtige Problematik der Ankopplung von Lichtleitfasern an integriert-optische Strukturen erhält hierdurch eine Lösungsmöglichkeit.

Das erfindungsgemäße Verfahren zur Herstellung eines mikrostrukturierten Körpers mit den kennzeichnenden Merkmalen des nebengeordneten Anspruchs 6 hat den Vorteil, daß aufgrund der geringen Viskosität von Reaktionsgußmassen und der damit verbundenen guten Kriechfähigkeit eine äußerst präzise Abformung von einem mit Erhebungen mit nahezu beliebig komplizierter Anordnung von Hohlräumen versehenen Formstempel erreichbar ist. Zudem weist der so hergestellte mikrostrukturierte Körper eine hohe Planarität an der Unterseite auf. Außerdem ist eine Reaktionsgußmasse in der Entwicklung und Herstellung billiger, als vergleichbare Spritzgußmassen. Da ein vorgefertigter Gußrahmen als Außenumrandung für den entstehenden mikrostrukturierten Körper fungiert, wird trotz der geringen Viskosität der Reaktionsgußmasse erreicht, daß eine präzise definierte Außenkontur für die weitere Verwendung des mikrostrukturierten Körpers zur Verfügung steht. Außerdem hat die Verwendung einer Reaktionsgußtechnik den Vorteil, daß keine hohen mechanischen Kräfte auf den mikrostrukturierten Körper oder die auszuhärtende Masse beim Herstellungsvorgang wirken, wodurch eine Verschiebung des Gußrahmens relativ zum Formstempel aufgrund der mechanischen Kräfte nahezu ausgeschlossen ist. Ebenso ist damit die Gefahr der Verschiebung von einlegbaren elektrooptischen Bauelementen verringert.

Durch die in den abhängigen Ansprüche 7 und 8 aufgeführten Maßnahmen sind vorteilhafte Weiterbildungen und Verbesserung des im Anspruch 6 angegebenen Verfahrens möglich.

Das Aufsetzen eines elektrooptischen Bauelements auf den Formstempel dort, wo es danach vom Gußrahmen überdeckt wird, bringt den Vorteil mit sich, daß gleichzeitig mit der Herstellung des mikrostrukturierten Körpers in Form eines integriert-optischen Deckelbauteils auch ein Einguß eines solchen elektrooptischen Bauelements in das integriert-optische Deckelbauteil erfolgt.

Das Andrücken des elektrooptischen Bauelements während des Reaktionsvorgangs gegen die Oberfläche des Formstempels dient in vorteilhafter Weise der Verhinderung des Aufschwimmens des elektrooptischen Bauelements in der noch flüssigen Reaktionsgußmasse.

Der erfindungsgemäße mikrostrukturierte Körper mit den kennzeichnenden Merkmalen des nebengeordneten Anspruchs 9 hat den Vorteil, daß durch die durch Reaktion verfestigte Reaktionsgußmasse der mikrostrukturierte Körper eine hochwertige und einen besonders exakten Abdruck des Formstempels aufweisende, besonders planare Oberfläche der Unterseite aufweist. Außerdem ist der mikrostrukturierte Körper preisgünstig herstellbar. Da er einen Gußrahmen als Außenumrandung aufweist, steht eine präzise definierte Außenkontur für die weitere Verwendung des mikrostrukturierten Körpers zur Verfügung.

Durch die in dem Anspruch 9 untergeordneten Anspruch 10 aufgeführte Maßnahme ist eine vorteilhafte Weiterbildung und Verbesserung des im Anspruch 9 angegebenen mikrostrukturierten Körpers möglich.

Die Ausbildung des mikrostrukturierten Körpers als integriert-optisches Deckelbauteil mit einem eingegossenen elektrooptischen Bauelement stellt ein preiswert herstellbares Bauteil dar, welches in vorteilhafter Weise eine Wandlung optischer Signal in elektrische Signale und umgekehrt erlaubt.

Der mikrostrukturierte Körper in Form eines integriert-optischen Deckelbauteils ist in vorteilhafter Weise geeignet, ein integriert-optisches Bauteil herzustellen, indem er gemäß dem nebengeordneten Anspruch 11 auf ein Bodenteil gesetzt wird und zusätzlich ein Polymerklebstoff eingefüllt wird, der die im integriert-optischen Deckelbauteil vorhandenen Vertiefungen ausfüllt, wodurch ein Wellenleiter entsteht. Das erfindungsgemäße Verfahren zur Herstellung eines integriert-optischen Bauteils mit einem mikrostrukturierten Körper mit den kennzeichnenden Merkmalen des nebengeordneten Anspruch 11 hat somit den Vorteil, daß aufgrund der exakten Außenabmessungen des integriert-optischen Deckelbauteils eine präzise Justierung auf dem Bodenteil möglich ist. Außerdem dient der Polymerklebstoff gleichzeitig als Klebstoff und als optischer Wellenleiter.

Ebenso ist es aber, gemäß dem nebengeordneten Anspruch 12 möglich, ein integriert-optisches Bauteil unter Verwendung eines als integriert-optisches Deckelbauteil ausgebildeten mikrostrukturierten Körpers herzustellen, indem das Deckelbauteil auf ein Substrat mit einem Wellenleitergraben aufgesetzt wird, der beim Verkleben mit dem integriert-optischen Deckelbauteil mit dem Polymerklebstoff gefüllt wird. Das erfindungsgemäße Verfahren zur Herstellung eines integriert-optischen Bauteils mit einem mikrostrukturierten Körper mit den kennzeichnenden Merkmalen des nebengeordneten Anspruchs 12 hat somit den Vorteil, daß aufgrund der exakten Außenabmessungen des integriert-optischen Deckelbauteils eine präzise Justierung bezüglich des im Substrat befindlichen Wellenleitergrabens möglich ist. Außerdem dient der Polymerklebstoff gleichzeitig als Klebstoff und als optischer Wellenleiter.

Das erfindungsgemäße integriert-optische Bauteil mit den kennzeichnenden Merkmalen des nebengeordneten Anspruchs 13 hat den Vorteil, daß ein präzise justiertes und auch justierbares Bauteil vorliegt, da die Außenabmessungen des integriert-optischen Deckelbauteils bereits sehr exakt sind.

Das erfindungsgemäße integriert-optische Bauteils mit den kennzeichnenden Merkmalen des nebengeordneten Anspruchs 14 hat den Vorteil, daß ein Bauteil vorliegt, bei dem das integriert optische Bauteil präzise zu einem entstehenden Wellenleiter in einem Substrat justiert ist, da die Außenabmessungen des integriert-optischen Deckelbauteils bereits sehr exakt sind.

### Zeichnung

Ausführungsbeispiel der Erfindung sind in der Zeichnung dargestellt und in der nachfolgenden Beschreibung näher erläutert.

Es zeigen:
Figur 1 eine perspektivische Ansicht eines Gußrahmens,
Figur 2 eine perspektivische Ansicht eines Formstempels mit einer Wanne,
Figur 3 eine aufgeschnittene Seitenansicht eines Formstempels mit aufgesetztem Gußrahmen,
Figur 4 ein integriert-optisches Deckelbauteil mit einem Steckelement,
Figur 5 einen Schnitt durch eine Vorrichtung mit einem auf einem Formstempel aufgesetzten Gußrahmen und mit einem elektrooptischen Bauelement,
Figur 6 einen Schnitt durch ein Bodenteil und ein integriert-optisches Deckelbauteil,
Figur 7 einen Schnitt durch ein Substrat und ein integriert-optisches Deckelbauteil.

### Beschreibung der Ausführungsbeispiele

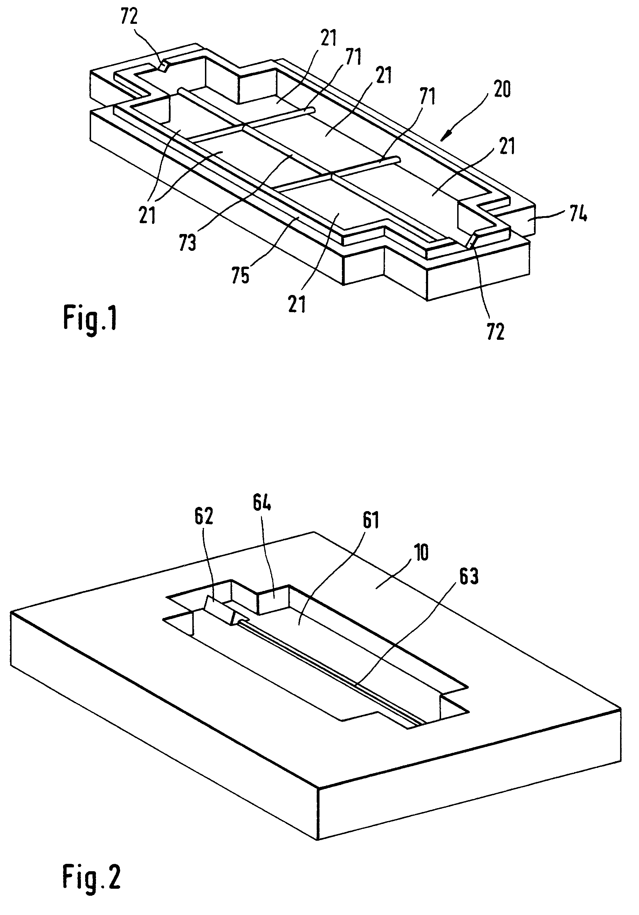

In Figur 1 ist ein Gußrahmen 20 dargestellt. Der Gußrahmen 20 weist die Form eines quaderförmigen, länglichen Rahmens auf, der an seinen Schmalseiten jeweils in ein quaderförmiges Ansatzrahmenstück übergeht. Die in Querrichtung zu den längeren Seiten des quaderförmigen, länglichen Rahmens verlaufenden Seiten der quaderförmigen Ansatzrahmenstücke sind in diesem Beispiel etwas kürzer als die Schmalseiten des quaderförmigen, länglichen Rahmens.

Andere Ausgestaltungen der Außenkontur des Gußrahmens 20 sind aber ebenfalls möglich und vorgesehen. Der Gußrahmen 20 ist in seinem Innenraum hohl, so daß er lediglich eine entlang der Außenlinien des quaderförmigen, länglichen Rahmens und der quaderförmigen Ansatzrahmenstücke verlaufende Wandung 74 aufweist. Die Wandung 74 weist an ihrer Oberseite auf ihrem inneren Rand einen rundumlaufenden Absatz auf, der als Rastelement 75 dient. Lediglich an den Stirnseite der quaderförmigen Ansatzstücke des Gußrahmens 20 weist das Rastelement 75 je eine invers-dachfirstförmige Kerbe 72 auf. Das Rastelement 75 wird im weiteren auch als Lippe bezeichnet. Im Inneren des Gußrahmens 20 sind zur Verbesserung der Stabilität eine entlang der Längsrichtung des Gußrahmens 20 verlaufende Längsstrebe 73 und zwei quer dazu verlaufende Querstreben 71 angeordnet. Die Zwischenräume zwischen den Streben 71, 73 stellen Einfüllöffnungen 21 dar.

Der so gestaltete Gußrahmen 20 soll als Gußform zur Herstellung eines mikrostrukturierten Körpers dienen. Dazu wird der Gußrahmen 20 auf einen Formstempel 10 aufgesetzt, der in Figur 2 dargestellt ist.

Der in Figur 2 gezeigte Formstempel 10 weist eine Wanne 61 auf, die in ihren Umrissen der Außenkontur der Lippe 75 entspricht. Im Inneren dieser Wanne 61 ist jeweils dort, wo die invers-dachfirstförmigen Kerben 72 des Gußrahmens 20 beim Aufsetzen des Gußrahmens 20 auf den Formstempel 10 zu liegen kommen, eine dachfirstförmige Erhebung 62 angeordnet, wobei die Firstlinien der beiden dachfirstförmigen Erhebungen 62 miteinander fluchten. In dieser Flucht ist auch eine die beiden dachfirstförmigen Erhebungen 62 verbindende quaderförmige Erhebung 63 angeordnet. Die Wanne 61 weist eine Wandung 64 auf, die als Gegenrastelement dient.

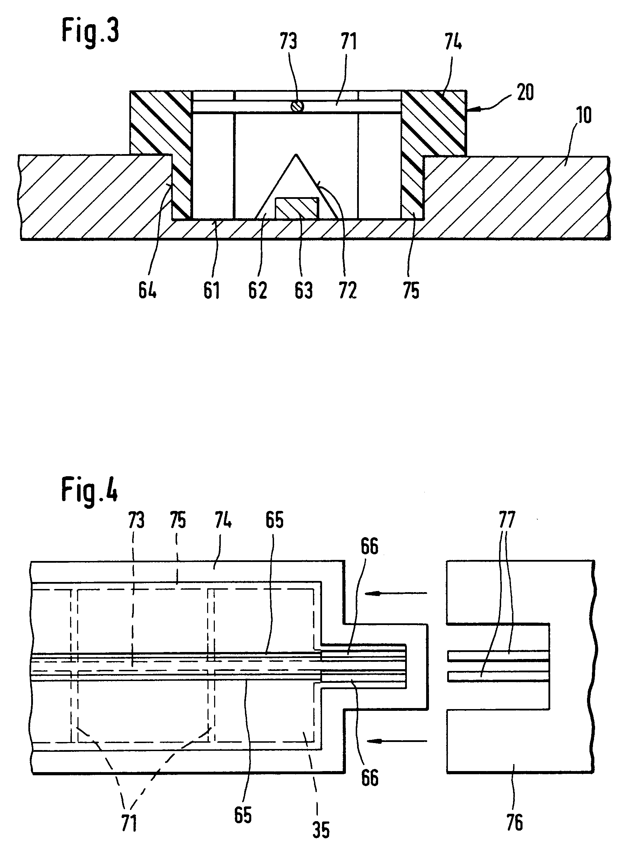

Der Gußrahmen 20 wird mit der Lippe 75 nach unten auf den Formstempel 10 aufgesetzt, wobei die Lippe 75 dichtend innerhalb des Gegenrastelements 64 einrastet. Diese Anordnung ist in Figur 3 dargestellt. Gleiche Elemente sind in Figur 3 wiederum gleich numeriert wie in den Figuren 1 und 2.

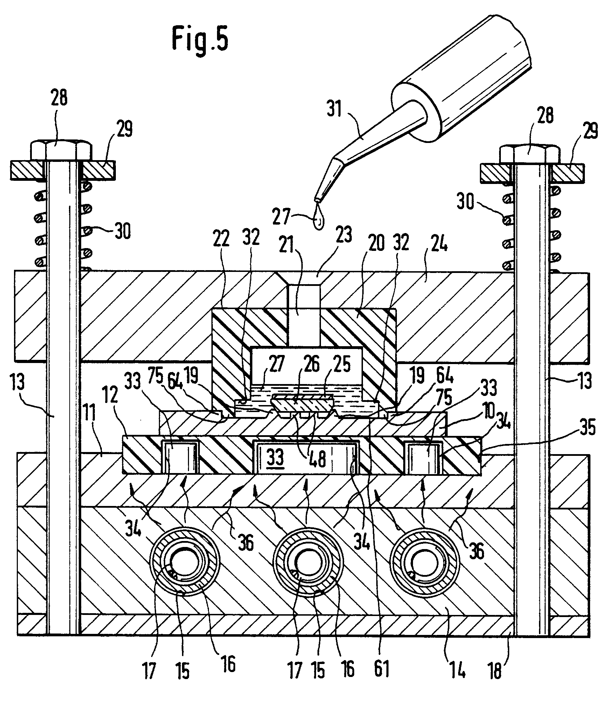

Durch das Einrasten der Lippe 75 in dem Gegenrastelement 64 erfolgt eine automatische Justierung des Gußrahmens 20 auf dem Formstempel 10. Die invers-dachfirstförmigen Kerben 72 kommen dabei über den dachfirstförmigen Erhebungen 62 zu liegen. Die Lippe 75 bildet so eine den Innenraum des Gußrahmens 20 nahezu vollständig abdichtende Lippe für den nun nachfolgenden Gußvorgang. Dazu wird, wie im Zusammenhang mit Figur 5 noch genauer beschrieben werden wird, eine aushärtbare Flüssigkeit, vorzugsweise eine Reaktionsgußmasse, in den Innenraum des Formstempels 20 gegossen und dort ausgehärtet. Nach dem Aushärten und Entformen vom Formstempel 10 entsteht somit ein mikrostrukturierter Körper, an dessen Unterseite ein Negativabdruck der Oberfläche der Wanne 61 des Formstempels 10 vorhanden ist.

In Figur 4 ist ein solcher mikrostrukturierter Körper dargestellt. Auch hier wurde wiederum die Numerierung aus den Figuren 1 bis 3 beibehalten. Beispielhaft ist hier gezeigt, wie in der in der Zeichnung dem Betrachter zugewandt dargestellten Unterseite des mikrostrukturierten Körpers mehrere Vertiefungen 65, 66 entstanden sind. Die Vertiefungen 66 sind dabei durch Abformung der dachfirstförmigen Erhebungen 62 entstanden und weisen somit einen invers-dachfirstförmigen Querschnitt auf. Die Vertiefungen 65 dagegen sind durch Abformung der quaderförmigen Erhebung 63 entstanden und weisen somit einen quaderförmigen Querschnitt auf. In diesem Beispiel wurden im Gegensatz zu den Darstellungen in den Figuren 2 und 3 jeweils zwei quaderförmige Vertiefungen 65 und insgesamt vier invers-dachfirstförmige Vertiefungen 66 hergestellt. Generell ist es freigestellt, wie viele Erhebungen und in welcher Form diese auf dem Formstempel angeordnet sind. Weiter in der Figur 4 gezeigt ist ein Steckelement 76, welches die inverse Form der Stirnseite des mikrostrukturierten Körpers aufweist. Dadurch läßt sich das Steckelement 76 beispielsweise in Pfeilrichtung auf den mikrostrukturierten Körper aufschieben. Vorzugsweise wird dazu eine besonders exakte und spielfreie Passung für das Steckelement 76 und den korrespondierenden Teil des mikrostrukturierten Körpers gewählt. Ebenso ist es vorzuziehen, wenn die Außenkontur des mikrostrukturierten Körpers besonders präzise in Relation zur Lage der Vertiefungen 65, 66 hergestellt wurde. Dadurch ist es nämlich gewährleistet, daß Lichtleitfasern 77, welche im Steckelement 76 gehaltert sind, beim Steckvorgang bereits mit hoher Präzision über die invers-dachfirstförmigen Vertiefungen 66 gelangen, wo sie durch diese Vertiefungen 66 dann schließlich automatisch feinjustiert werden. Beim Verbinden mit den Lichtleitfasern 77 ist es von Vorteil, zunächst das Steckelement 76 in Pfeilrichtung auf den mikrostrukturierten Körper aufzuschieben, wobei die Lichtleitfasern 77 noch einen vorgegebenen Abstand von der Oberfläche des mikrostrukturierten Körpers aufweisen und dann die Lichtleitfasern 77 mit dem Steckelement 76 auf die Oberfläche des des mikrostrukturierten Körpers abzusenken.

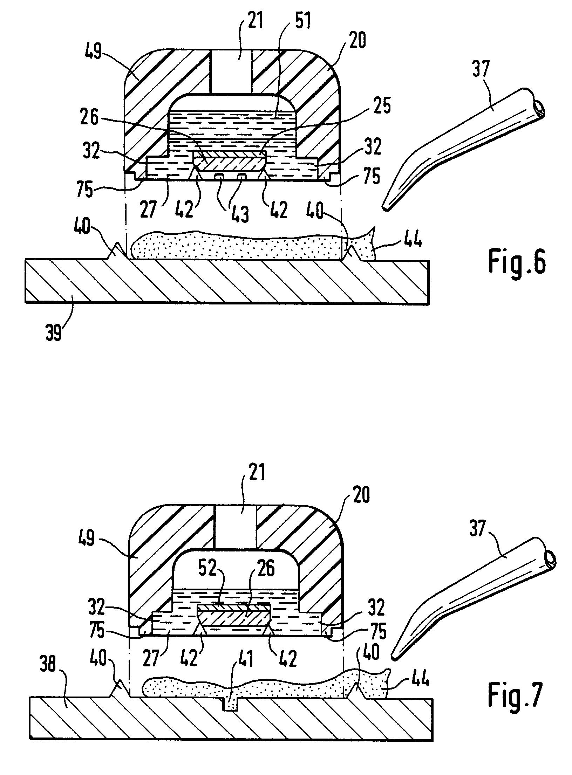

Mit dieser Anordnung ist es besonders möglich eine exakte optische Ankopplung der Lichtleitfasern 77 an die quaderförmigen Vertiefungen 65 zu erreichen. Da es vorgesehen ist, den mikrostrukturierten Körper, der hier als integriert-optisches Deckelbauteil fungiert, in einem weiteren Bearbeitungsschritt mit einem Polymerklebstoff zu beschichten, der wenigstens die quaderförmigen Vertiefungen 65 ausfüllt und somit je einen Wellenleiter bildet, wird dadurch eine gute Ankopplung zwischen den Lichtleitfasern 77 und den dadurch entstandenen Wellenleitern ermöglicht. Näheres zur Herstellung der Wellenleiter wird im Zusammenhang mit den Figuren 6 und 7 beschrieben werden. Alternativ oder gleichzeitig mit den Lichtleitfasern 77 können auch elektrische Kontaktelemente in dem Steckelement 76 vorgesehen sein, die beim Aufstecken auf den mikrostrukturierten Körper mit entsprechenden Kontakten, beispielsweise eines bezüglich der Außenkontur des integriert-optischen Deckelbauteils präzise positioniert eingegossenen elektrooptischen Bauelements und/oder eines Thermoaktors in Kontakt gelangen. Die Aufsteckrichtung kann dabei ebenfalls variieren. Der Gußrahmen 20 kann auch ohne die invers-dachfirstförmigen Kerben 72 ausgeführt sein, solange dies nicht die spätere Funktion des entstehenden mikrostrukturierten Körpers beeinträchtigt. So kann speziell bei der Herstellung des mikrostrukturierten Körpers als integriert-optisches Deckelbauteil die Lippe 75 auch so flach bzw. die die Wanne 61 so tief dimensioniert sein, daß die Lippe 75 beim Aufsetzen auf den Formstempel 20 die dachfirstförmigen Erhebungen 62 nicht oder nur schwach berührt. Auch muß das Rastelement 75 nicht überall für die Bewirkung einer Dichtung ausgebildet sein. Je nach Anwendungsfall kann es genügen, wenn das Rastelement 75 eine nur teilweise Abdichtung, insbesondere an kritischen Stellen bewirkt, indem es beispielsweise als nicht vollständig geschlossene Lippe ausgebildet ist. Es sind auch Anwendungsfälle möglich, bei denen das Rastelement 75 überhaupt keine Abdichtung bewirkt, oder bei denen ein anderes Abdichtmittel zusätzlich zum Rastelement 75 angeordnet ist.

Im Folgenden wird das Verfahren zur Herstellung des mikrostrukturierten Körpers am Beispiel eines integriert-optischen Deckelbauteils beschrieben. Der verwendete Gußrahmen 20 weist in diesem Beispiel einen obenliegenden Boden auf, in dem eine einzige Einfüllöffnung 21 angeordnet ist.

In Figur 5 ist eine flache Bodenplatte 18 dargestellt, die zwei in etwa parallel zueinander und vertikal zur Bodenplatte 18 ausgerichtete Führungsstangen 13 aufweist. Weiter ist eine flache Grundplatte 14 vorgesehen, welche zwei Löcher aufweist, durch die die Führungsstangen 13 der Bodenplatte 18 ragen. Die Grundplatte 14 liegt mit ihrer Unterseite bündig auf der Oberseite der Bodenplatte 18 auf. Weiter ist eine flache Zwischenplatte 11 vorgesehen, welche ebenfalls zwei Löcher aufweist, durch die die Führungsstangen 13 ragen. Die Zwischenplatte 11 liegt mit ihrer Unterseite auf der Oberseite der Grundplatte 14. Die Grundplatte 14 weist in etwa parallel zu ihrer flachen Oberseite mehrere nebeneinanderliegende zylinderförmige Aussparungen 15 auf, wobei in jeder zylinderförmigen Aussparung 15 eine Hülse 16 mit einer darin angeordneten Drahtwendel 17 angeordnet ist. Beim Durchfließen elektrischen Stroms durch die Drahtwendeln 17 geben diese eine Wärmestrahlung 36 ab. Die Zwischenplatte 11 weist im Bereich zwischen den beiden Führungsstangen 13 auf ihrer Oberseite ein in etwa kreisförmige Vertiefung 35 auf, in die eine in etwa kreisscheibenförmige, flache Trägerplatte 12 einlegbar ist. Die Trägerplatte 12 liegt dabei annähernd paßgenau in der Vertiefung 35, wobei mehrere in der Trägerplatte 12 angeordnete Sacklöcher 34 mit ihrer Öffnung nach unten zur Zwischenplatte 11 zeigen. In den Sacklöchern 34 befinden sich mehrere Permanentmagnete 33. Auf der Oberseite der Trägerplatte 12 ist ein flacher Formstempel 10 angeordnet, der auf seiner Oberseite mehrere dachfirstförmige Erhebungen 19 und außerdem mehrere quaderförmige Erhebungen 48 aufweist. Auf den quaderförmigen Erhebungen 48 stützt sich ein elektrooptisches Bauelement 26 ab, dessen äußere Flanken an den dachfirstförmigen Erhebungen 19 anliegen. Auf der den Erhebungen 19, 48 abgewandten Oberfläche seiner Rückseite weist das elektrooptische Bauelement 26 eine ferromagnetische Scheibe 25 auf. Weiter vorgesehen ist der Gußrahmen 20, dessen offene Seite nach unten, zum Formstempel 10 hin zeigt. Der Gußrahmen 20 liegt mit seiner durch die Stirnfläche seiner Seitenwände gebildeten Umrandung auf dem Formstempel 10 auf und ist mit dem Rastelement 75 in dem Gegenrastelement 64 des Formstempels 10 eingerastet, so daß der Formstempel 10 einen Boden für den Innenraum des Gußrahmens 20 bildet. Der Gußrahmen 20 ist in seinem Innenraum oberhalb der Oberfläche des Formstempels 10 teilweise mit einer aushärtbaren Flüssigkeit 27 gefüllt. Als aushärtbare Flüssigkeit 27 dient beispielsweise eine Reaktionsgußmasse. Die Reaktionsgußmasse 27 umschließt dabei das elektrooptische Bauelement 26. Der Gußrahmen 20 ist zu einem Teil in einer Halterungsaussparung 22 in einer flachen Deckelplatte 24 gehaltert. Der Gußrahmen 20 weist in seinem obenliegenden Boden die Einfüllöffnung 21 auf, welche mit einer Aussparung 23, welche in der Deckelplatte 24 angeordnet ist, fluchtet. Die Deckelplatte 24 ist gleichfalls mittels zweier Bohrungen, durch die die Führungsstangen 13 ragen, über die Führungsstangen 13 geführt und wird über zwei Spiralfedern 30, welche um die Führungsstangen 13 herum angeordnet sind, nach unten gedrückt. Nach oben stützen sich die Spiralfedern 30 an je einer Anschlagplatte 29 ab, welche mit je einer Anpreßschraube 28 auf der Führungsstange 13 befestigt sind. Weiter ist eine Pipette 31 vorgesehen, mittels der die Reaktionsgußmasse 27 durch die Aussparung 23 und die Einfüllöffnung 21 in den Gußrahmen 20 einfüllbar ist. Der Gußrahmen 20 weist außerdem nahe der Umrandung in seinem Innenraum eine Hilfsstruktur 32 in Form eines an den Seitenwänden rundum laufenden Absatzes auf.

Der Gußrahmen 20 wird zunächst in die Deckelplatte 24 eingelegt, so daß dessen Boden in der Halterungsaussparung 22 zu liegen kommt. Vorzugsweise ist die Halterungsaussparung 22 so ausgebildet, daß ein leichtes Klemmen des Gußrahmens 20 erfolgt. Der Gußrahmen 20 besteht vorzugsweise aus einem Kunststoff, wie beispielsweise Polyamid (PA) oder Polyoxymethylen (POM), welcher jedoch nicht unbedingt optisch transparent sein muß. POM oder PA sind besonders geeignet, da sich aufgrund der negativen Oberflächenspannung gegenüber der Reaktionsgußmasse (z.B. MMA) eine hohe Planarität der Abformfläche und eine relative Beweglichkeit zwischen Gußrahmen 20 und verfestigter Reaktionsgußmasse 27 ergibt. Weiter wird die beschriebene Anordnung zunächst soweit fertiggestellt, daß die Bodenplatte 18, die Grundplatte 14 und die Zwischenplatte 11 übereinander liegen. Ebenso wird die Trägerplatte 12 mit den in die Sacklöcher 34 eingelegten Permanentmagneten 33 in die Vertiefung 35 der Zwischenplatte 11 eingelegt.

Auf die Trägerplatte 12 wird dann der Formstempel 10 aufgelegt. Durch die Permanentmagnete 33 wird der Formstempel 10 in seiner Lage fixiert. Der Formstempel 10 wird dabei so ausgerichtet, daß er eine definierte Lage in bezug auf den später aufzusetzenden Gußrahmen 20 einnimmt. Anschließend wird das elektrooptische Bauelement 26 mit der auf seiner Rückseite befindlichen ferromagnetischen Scheibe 25 in den Formstempel 10 eingelegt, wobei die dachfirstförmigen Erhebungen 19 und die quaderförmigen Erhebungen 48 eine automatische passive Justierung des elektrooptischen Bauelements 26 bezüglich des Formstempels 10 bewirken. Dann wird die Deckelplatte 24 mit dem eingelegten Gußrahmen 20 mit der Öffnung des Gußrahmens 20 nach unten auf die Anordnung aufgesteckt, wobei die Führungsstangen 13 die mechanische Grobführung der Deckelplatte 24 übernehmen. Das Rastelement 75 und das Gegenrastelement 64 sorgen beim Aufeinandertreffen für die Feinjustage zwischen Formstempel 10 und Gußrahmen 20. Dazu kann es vorgesehen sein, auch eine leichte laterale Bewegung, bzw. Rütteln auszuführen, bis ein Einrasten erfolgt und gegebenenfalls detektiert wird. Durch Anbringen der Spiralfedern 30 zusammen mit den Anschlagplatten 29 und den Anpreßschrauben 28 wird die Deckelplatte 24 mit dem trogförmigen Behälter 20 in der eingerasteten Stellung auf die Oberfläche des Formstempels 10 gepreßt. Sodann wird durch die Aussparung 23 und die Einfüllöffnung 21 mittels der Pipette 31 die flüssige Reaktionsgußmasse 27 in den Innenraum des Gußrahmens 20 eingefüllt. Die ferromagnetische Andruckscheibe 25 bewirkt, daß das elektrooptische Bauelement 26 aufgrund der Magnetkräfte der Magneten 33 gegen die Oberfläche des Formstempels 10 gepreßt wird. Beim Einfließen der flüssigen Reaktionsgußmasse 27 in den Gußrahmen 20 wird jeder zugängliche Zwischenraum innerhalb des trogförmigen Behälters 20 von der Reaktionsgußmasse 27 ausgefüllt. Die Reaktionsgußmasse 27 weist dazu vorzugsweise eine geringe Viskosität auf. Es ist dabei nicht notwendig, den Gußrahmen 20 ganz mit der Reaktionsgußmasse 27 zu füllen.

Diese Anordnung wird nun von unten her beheizt, indem elektrischer Strom durch die Drahtwendeln 17 geschickt wird. Dadurch erwärmen sich die Hülsen 16 und dann auch die gesamte Grundplatte 14. Die Wärmestrahlung 36 gelangt somit von unten durch die Grundplatte 14, die Zwischenplatte 11, die Trägerplatte 12 und den Formstempel 10 zu dessen Oberseite. Die Drahtwendeln 17 sind dabei vorzugsweise so gleichmäßig in der Grundplatte 14 verteilt, daß eine annähernd ebene Wärmestrahlung 36 von unten nach oben in Richtung auf den Formstempel 10 resultiert. Die flüssige Reaktionsgußmasse 27 besteht z.B. aus einem polymerisationsfähigen Monomer, welches mit Thermoinitiatoren vermischt ist. Durch die Thermoinitiatoren beginnt nun mit wachsender Temperatur ab einer gewissen Schwelltemperatur eine Polymerisation der Reaktionsgußmasse 27. Da die Wärmestrahlung 36 von unten an den Formstempel 10 geführt wird, beginnt die Polymerisation zuerst an der der Oberfläche des Formstempels 10 nächstgelegenen Fläche der Reaktionsgußmasse 27.

Vorzugsweise wird die Reaktionsgußmasse 27 dabei so zusammengesetzt, daß Thermoinitiatoren mit wenigstens zwei unterschiedlichen Temperaturschwellen darin enthalten sind. Dann genügt ein Beheizen der Anordnung bis zur ersten Temperaturschwelle, um zumindest ein teilweises Polymerisieren der Reaktionsgußmasse 27 zu bewirken. Das Beseitigen des dabei übrigbleibenden Restmonomers durch Erhitzen auf die zweite Schwelltemperatur kann dann in einem separaten Heizofen, unabhängig von der hier dargestellten Anordnung erfolgen. Für die Anwendung im integriert-optischen Anwendungsbereich ist es sinnvoll, eine zumindest im Bereich um die zu verwendenden optischen Wellenlängen optisch transparente Reaktionsgußmasse 27 zu wählen, damit eine verlustarme Führung der optischen Signale erreicht werden kann. Anstelle der Andruckscheibe 25 auf der Rückseite des elektrooptischen Bauelements 26 ist es ebenso vorgesehen, Permanentmagnete am oder im elektrooptischen Bauelement 26 anzubringen, um ein Aufschwimmen des elektrooptischen Bauelements 26 in der flüssigen Reaktionsgußmasse 27 zu verhindern. Der Anbringungsort für die Andruckscheibe 25 oder entsprechende Permanentmagnete ist dabei variabel und vorzugsweise auf der dem Formstempel 10 nahe gelegenen Unterseite des elektrooptischen Bauelements 26, da sich durch den im integriert-optischen Anwendungsbereich geringen Abstand des elektrooptischen Bauelements 26 vom Formstempel 10 dann eine hohe Andruckkraft entwickelt.

Alternativ zur magnetischen Andrückung des elektrooptischen Bauelements 26 können auch mechanische Komponenten vorgesehen sein, die diese Funktion ausüben.

Ebenso ist für das Andrücken des Gußrahmens 20 an den Formstempel 10 jede äquivalente Druckerzeugung (Hydraulik, Pneumatik etc.) einsetzbar. Die Heizung kann ebenfalls auf beliebige andere Weise (Verbrennung, Induktion etc.) erfolgen. An Stelle der Führungsstangen 13 können auch andere Führungs- bzw. Positioniervorrichtungen oder - verfahren treten. Nach dem Aushärten der Reaktionsgußmasse 27 wird die Anordnung wieder entformt, indem das aus Gußrahmen 20 mit der verfestigten Reaktionsgußmasse 27 und dem darin eingebetteten elektrooptischen Bauelement 26 bestehende, entstandene integriert-optische Deckelbauteil vom Formstempel 10 und aus der Halterungsaussparung 22 entfernt wird.

In Figur 6 ist gezeigt, wie der Gußrahmen 20 zusammen mit der ausgehärteten Reaktionsgußmasse 27 ein integriert-optisches Deckelbauteil 49 bildet. Beim Entformen von der in der Figur 5 dargestellten Anordnung hinterlassen die Erhebungen 19, 48 entsprechende Vertiefungen 42, 43 im integriert-optischen Deckelbauteil 49. Zusätzlich wurde nach dem Verfestigen der Reaktionsgußmasse 27 eine Füllmasse 51 in den Gußrahmen 20 eingefüllt. Das integriert-optische Deckelbauteil 49 wird nun auf ein Bodenteil 39 aufgesetzt, welches an seiner Oberseite zwei dachfirstförmige Justierelemente 40 aufweist, die die laterale Position des integriert-optischen Deckelbauteils 49 bestimmen. Außerdem wird zwischen integriert-optisches Deckelbauteil 49 und Bodenteil 39 mittels eines Auftragswerkzeugs 37 ein Polymerklebstoff 44 eingebracht.

Beim Aufsetzen des integriert-optischen Deckelbauteils 49 auf das Bodenteil 39 wirkt ein Teil des Polymerklebstoffs 44 als verbindender Werkstoff, und ein anderer Teil des Polymerklebstoffs 44 wird in die Vertiefungen 42, 43 gedrängt. Die quaderförmigen Vertiefungen 43 dienen hierbei als Wellenleitergraben, wobei durch das Ausfüllen mittels des Polymerklebstoffs 44 je ein Wellenleiter darin entsteht. Dadurch wurde ein integriert-optisches Bauteil hergestellt. Die Füllmasse 51 muß im Gegensatz zur Reaktionsgußmasse 27 nicht eine hohe optische Qualität aufweisen, sondern dient hier vor allem der mechanischen Stabilität. Dadurch kann die optisch wirksame Schichtdicke der verfestigten Reaktionsgußmasse 27 sehr dünn gehalten werden, was eine preisgünstige Herstellung ermöglicht.

In Figur 7 ist eine ähnliche Anordnung wie in Figur 6 gezeigt, bei der das integriert-optische Deckelbauteil 49 allerdings auf ein Substrat 38, welches einen Wellenleitergraben 41 aufweist, aufgesetzt wird. In diesem Fall weist das integriert-optische Deckelbauteil 49 nur das eingegossene elektrooptische Bauelement 26 und die dachfirstförmigen Vertiefungen 42 und keine quaderförmigen Vertiefungen auf. Außerdem ist an Stelle der Scheibe 25 ein Permanentmagnet 52 auf dem elektrooptischen Bauelement 26 aufgebracht, der dazu dient, das elektrooptische Bauelement 26 an den Formstempel 10 zu drücken.

Vorzugsweise ist der Permanentmagnet 52 auf der Unterseite des elektrooptischen Bauelements 26 angebracht, um die wirksame magnetische Anziehungskraft zu maximieren. Auf das Substrat 38 wird der Polymerklebstoff 44 aufgebracht und fließt unter anderem in den Wellenleitergraben 41. Das integriert-optische Deckelbauteil 49 wird durch die Justierelemente 40 in seiner Lage bezüglich des mit Polymerklebstoff 44 gefüllten Wellenleitergrabens 41 justiert. Somit fungiert der Polymerklebstoff 44 auch hier gleichzeitig als Klebstoff zur Verbindung des integriert-optischen Deckelbauteils 49 mit dem Substrat 38, als auch zur Bildung eines Wellenleiters im Wellenleitergraben 41, welcher optisch an das elektrooptische Bauelement 26 angekoppelt ist. Auch hier ist somit ein integriert-optisches Bauteil entstanden.

## Patentansprüche

1. Gußrahmen für die Herstellung eines mikrostrukturierten Körpers, insbesondere eines integriert-optischen Deckelbauteils (49), bei der der Gußrahmen (20) auf einen Formstempel (10) aufgesetzt wird und anschließend ein Einfüllen einer aushärtbaren Flüssigkeit (27), vorzugsweise einer optisch transparenten, flüssigen Reaktionsgußmasse, in den Gußrahmen (20) erfolgt, mit wenigstens einer an der Unterseite des Gußrahmens (20) liegenden Öffnung, dadurch gekennzeichnet, daß an der Unterseite des Gußrahmens (20) wenigstens ein Rastelement (75) angeordnet ist, das beim Auflegen des Gußrahmens (20) auf den Formstempel (10) in ein korrespondierendes Gegenrastelement (64) auf dem Formstempel (10) einrastbar ist.

2. Gußrahmen nach Anspruch 1, dadurch gekennzeichnet, daß das Rastelement (75) eine Lippe aufweist, die dichtend in das im Formstempel (10) als Wanne ausgebildete Gegenrastelement (64) eingreift.

3. Gußrahmen nach Anspruch 1 oder 2, dadurch gekennzeichnet, daß der Gußrahmen (20) an seiner Oberseite wenigstens eine Einfüllöffnung (21) für die aushärtbare Flüssigkeit (27) aufweist.

4. Gußrahmen nach einem der Ansprüche 1 bis 3, dadurch gekennzeichnet, daß der Gußrahmen (20) eine in der Lage zum Rastelement (75) definierte Außenkontur aufweist.

5. Gußrahmen nach einem der Ansprüche 1 bis 4, dadurch gekennzeichnet, daß auf den Gußrahmen (20) ein Steckelement (76) aufsteckbar ist, in dem wenigstens eine Lichtleitfaser (77) und/oder ein elektrisches Kontaktelement gehaltert ist.

6. Verfahren zur Herstellung eines mikrostrukturierten Körpers, insbesondere eines integriert-optischen Deckelbauteils, unter Verwendung eines Gußrahmens (20) nach einem der Ansprüche 1 bis 5, dadurch gekennzeichnet, daß der Gußrahmen (20) mit seiner Öffnung nach unten auf einen Formstempel (10) gesetzt wird, welcher wenigstens eine Erhebung (19, 48, 62, 63) und ein Gegenrastelement (64) aufweist, daß das Rastelement (75) des Gußrahmens (20) in das Gegenrastelement (64) einrastet, und daß in den Innenraum des Gußrahmens (20) eine aushärtbare Flüssigkeit (27) in Form einer optisch transparenten, flüssigen Reaktionsgußmasse eingefüllt wird, die sich auf der innerhalb des Gußrahmens (20) liegenden Oberfläche des Formstempels (10) verteilt und daß die Reaktionsgußmasse (27) dann durch Erwärmen zur Reaktion gebracht wird, wodurch sich die Reaktionsgußmasse (27) wenigstens teilweise verfestigt und daß der aus dem Gußrahmen (20) und der wenigstens teilweise verfestigten Reaktionsgußmasse (27) bestehende mikrostrukturierte Körper vom Formstempel (10) wieder abgehoben wird, wobei die wenigstens eine Erhebung (19, 48, 62, 63) in der wenigstens teilweise verfestigten Reaktionsgußmasse (27) wenigstens eine Vertiefung (65, 66, 42, 43) hinterläßt.

7. Verfahren zur Herstellung eines mikrostrukturierten Körpers nach Anspruch 6, dadurch gekennzeichnet, daß als mikrostrukturierter Körper ein integriert-optisches Deckelbauteil (49) hergestellt wird, indem vor dem Aufsetzen des Gußrahmens (20) auf den Formstempel (10) wenigstens ein elektrooptisches Bauelement (26) auf den Formstempel (10) auf einer Stelle aufgesetzt wird, welche danach vom Gußrahmen (20) überdeckt wird.

8. Verfahren zur Herstellung eines mikrostrukturierten Körpers nach Anspruch 7, dadurch gekennzeichnet, daß das elektrooptische Bauelement (26) während des Reaktionsvorgangs gegen die Oberfläche des Formstempels (10) gedrückt wird.

9. Mikrostrukturierter Körper mit einem Gußrahmen (20) nach einem der Ansprüche 1 bis 5, dadurch gekennzeichnet, daß der Gußrahmen (20) auf einer Seite mit einer durch ausgehärteten Flüssigkeit (27), insbesondere einer verfestigten Reaktionsgußmasse, verschlossen ist und daß die ausgehärtete Flüssigkeit (27) auf der dem Innenraum des Gußrahmens (20) entgegengesetzten Seite wenigstens eine Vertiefung (65, 66, 42, 43) aufweist.

10. Mikrostrukturierter Körper nach Anspruch 9, dadurch gekennzeichnet, daß er als integriert-optisches Deckelbauteil (49) ausgebildet ist, indem in der ausgehärteten Flüssigkeit (27) wenigstens ein elektrooptisches Bauelement (26) wenigstens teilweise eingebettet ist.

11. Verfahren zur Herstellung eines integriert-optischen Bauteils mit einem mikrostrukturierten Körper nach einem der Ansprüche 9 oder 10, dadurch gekennzeichnet, daß der als integriert-optisches Deckelbauteil (49) ausgebildete mikrostrukturierte Körper auf ein Bodenteil (39) aufgesetzt wird, wobei wenigstens eine der wenigstens einen Vertiefung (65, 66, 42, 43) als Wellenleitergraben dient und daß zwischen das Bodenteil (39) und die ausgehärtete Flüssigkeit (27) ein Polymerklebstoff (44) eingefüllt wird, der beim Aufsetzen den Wellenleitergraben füllt, wodurch das das integriert-optische Deckelbauteil (49), das Bodenteil (39) und den Polymerklebstoff (44) umfassende integriert-optische Bauteil entsteht.

12. Verfahren zur Herstellung eines integriert-optischen Bauteils mit einem mikrostrukturierten Körper nach einem der Ansprüche 9 oder 10, dadurch gekennzeichnet, daß der als integriert-optisches Deckelbauteil (49) ausgebildete mikrostrukturierte Körper auf ein Substrat (38) aufgesetzt wird, welches einen Wellenleitergraben (41) aufweist und daß zwischen das Substrat (38) und die ausgehärtete Flüssigkeit (27) ein Polymerklebstoff (44) eingefüllt wird, der beim Aufsetzen den Wellenleitergraben (41) füllt, wodurch das das integriert-optische Deckelbauteil (49), das Substrat (38) und den Polymerklebstoff (44) umfassende integriert-optische Bauteil entsteht.

13. Integriert-optisches Bauteil mit einem als integriert-optisches Deckelbauteil (49) ausgebildeten mikrostrukturierten Körper nach einem der Ansprüche 9 oder 10, dadurch gekennzeichnet, daß das integriert-optische Deckelbauteil (49) mittels eines Polymerklebstoffs (44) auf einem Bodenteil (39) befestigt ist, wobei der Polymerklebstoff(44) die wenigstens eine Vertiefung (65, 66 42, 43) ausfüllt.

14. Integriert-optisches Bauteil mit einem als integriert-optisches Deckelbauteil (49) ausgebildeten mikrostrukturierten Körper nach einem der Ansprüche 9 oder 10, dadurch gekennzeichnet, daß das integriert-optische Deckelbauteil mittels eines Polymerklebstoffs (44) auf einem Substrat (38) befestigt ist, welches einen Wellenleitergraben (41) aufweist, wobei der Polymerklebstoff (44) den Wellenleitergraben (41) ausfüllt.
